# FASCICULE DE BREVET EUROPEEN

(11) **EP 2 932 624 B1**
(45) Date de publication et mention de la délivrance du brevet: **22.01.2020**
(21) Numéro de dépôt: 13814858.0
(22) Date de dépôt: 06.12.2013
(51) Int. Cl.: H04B 7/185

(54) **RECEPTEUR DE SIGNAUX RADIOFREQUENCE DESTINE A ETRE INSTALLE SUR UN SATELLITE**
HOCHFREQUENZSIGNALEMPFÄNGER AUF EINEM SATELLITEN
RADIOFREQUENCY SIGNAL RECEIVER TO BE PROVIDED ON A SATELLITE

(30) Priorité: 14.12.2012 FR 1203404
(43) Date de publication de la demande: 21.10.2015
(73) Titulaire: THALES, 92400 Courbevoie (FR)
(72) Inventeur: NASTA, Rodolphe, F-31100 Toulouse (FR); POPULUS, Thierry, F-31470 Fontenilles (FR)
(74) Mandataire: Derval, Estelle
(86) Numéro de dépôt international: PCT/EP2013/075790
(87) Numéro de publication internationale: WO 2014/090699

(56) Documents cités:
- WO-A1-2009/080754
- WO-A1-2010/106019
- US-A- 4 479 255

## Description

L'invention se rapporte à un récepteur de signaux radiofréquences destiné à être installé à bord d'un satellite. L'invention se rapporte notamment à un récepteur de télécommande satellite aussi appelé récepteur TCR ou TTC acronymes des expressions anglo-saxonnes «Telemetry, Commande and Ranging », en français télémesure, télécommande et mesure de distance et « Telemetry Tracking and Command », en français télémesure, poursuite et télécommande.

Ce type de récepteur TTC ou TCR est installé à bord d'un satellite géostationnaire ou défilant et met en oeuvre une liaison de télécommande TTC ou TCR entre des stations au sol et le satellite.

L'invention se rapporte également aux récepteurs de signaux de télécommunication de type répéteur et aux récepteurs d'écartométrie de satellites destinés à être installés à bord des satellites.

Un besoin actuel est de pouvoir connaitre le spectre des signaux reçus par un récepteur dans une plage de fréquences de fonctionnement sur laquelle il peut fonctionner lorsqu'il est installé à bord d'un satellite.

La connaissance du spectre peut permettre de détecter des brouillages et de mettre en oeuvre des solutions pour résister au brouillage ou d'optimiser les fréquences de réception de plusieurs satellites lors d'un changement de position orbitale.

Une solution pour tracer ce spectre consiste à installer un analyseur de spectre à bord du satellite. L'analyseur de spectre présente l'inconvénient d'être un équipement en tant que tel qui occupe un volume non négligeable sur le satellite. Or, un enjeu est de limiter au maximum le nombre d'équipements installés à bord des satellites. Par ailleurs, cet équipement est complexe et coûteux.

Une autre solution consiste à analyser, dans une station au sol, la puissance des signaux renvoyés à cette station par un répéteur installé à bord du satellite. Le répéteur satellite reçoit des signaux montants, les amplifie et émet des signaux descendants à partir des signaux amplifiés. Cette solution présente l'inconvénient suivant : les signaux montants qui sont amplifiés et réémis sont des signaux utiles, par exemple, de télécommunication émis dans des bandes de fréquences prédéterminées espacées les unes des autres. Les signaux sont réémis dans les mêmes bandes ou dans d'autres bandes de fréquences également espacées les unes des autres. L'analyse au sol ne permet pas de connaître le spectre entre ces bandes de fréquence. Autrement dit, il n'est pas possible de connaitre le spectre de puissance des signaux reçus par le récepteur sur la totalité de la plage de fréquences de fonctionnement du récepteur.

Le but de l'invention est de remédier aux inconvénients précités.

US4479255 décrit un récepteur de signaux radio-fréquences pour acquérir des signaux provenant d'une pluralité de stations.

WO2009080754 décrit un dispositif de filtrage de canaux de communication dans les satellites de communication.

Ce but est atteint en équipant un récepteur de signaux radiofréquences destiné à être embarqué à bord d'un satellite:
- d'un dispositif de pilotage en fréquence du récepteur permettant de régler, à partir d'une commande de fréquence, la fréquence de réception du récepteur
- d'un ensemble de filtrage de type filtre passe-bande présentant une bande passante, appelée bande passante de l'ensemble de filtrage, dont la largeur est réglable et peut prendre un ensemble de valeurs, l'ensemble de filtrage permettant de limiter la bande passante d'un premier signal représentatif du signal d'entée du récepteur à la bande passante de l'ensemble de filtrage,
- de moyens de réglage permettant de régler la largeur de la bande passante de l'ensemble de filtrage à partir d'une commande de largeur de bande de filtrage,
- de moyens d'acquisition de puissance permettant de délivrer une mesure de la puissance du premier signal en sortie de l'ensemble de filtrage.

Cette solution offre un récepteur qui est capable de fournir des spectres de puissance avec des résolutions différentes d'un signal d'entrée du récepteur sur des bandes d'analyse correspondant à la plage de fréquence de fonctionnement ou à des sous-bandes de la plage de fréquence de fonctionnement en réalisant des balayages de ces bandes d'analyse avec des pas différents et en réglant la largeur de la bande passante de l'ensemble de filtrage sur une largeur au moins égale au pas sélectionné. Elle permet donc, par une commande appropriée du dispositif de pilotage et des moyens de réglage, de connaitre la puissance du signal reçu par le satellite de façon continue sur toute bande d'analyse.

Cette solution présente également l'avantage de ne pas nécessiter l'installation d'un analyseur de spectre dédié à bord du satellite. Par ailleurs, ce récepteur permet de réaliser les mêmes fonctions qu'un analyseur de spectre à savoir le tracé d'un spectre présentant une résolution plus ou moins fine puisqu'il est possible de balayer des fréquences de fonctionnement du récepteur avec plusieurs pas et de choisir une largeur de bande passante adaptée au pas pour obtenir un spectre continu.

Avantageusement, le récepteur comprend un ensemble de chaine de conversion de fréquence délivrant à sa sortie le premier signal centré sur une fréquence intermédiaire fixe, l'ensemble de chaine de conversion de fréquence comprenant une première chaine de conversion de fréquence recevant le signal d'entrée du récepteur et délivrant à sa sortie un premier signal intermédiaire centré sur une première fréquence intermédiaire fixe, la première chaine de conversion de fréquence comprenant :
- un oscillateur local synthétisé apte à délivrer un signal de sortie de l'oscillateur à une fréquence appelée fréquence d'oscillateur prise parmi un ensemble de fréquences d'oscillateur prédéterminées à partir d'une commande en fréquence,
- un mélangeur recevant le signal reçu en entrée du récepteur et le signal de sortie de l'oscillateur et délivrant un premier signal intermédiaire centré sur une première fréquence intermédiaire.

Avantageusement, l'ensemble de filtrage comprend au moins un filtre passe-bande, ledit filtre passe-bande étant centré sur la fréquence intermédiaire.

Avantageusement, l'ensemble de filtrage comprend au moins un filtre passe-bande, ledit filtre passe-bande étant un filtre passe-bas lorsque la fréquence intermédiaire est égale à 0Hz.

Avantageusement, le récepteur est un récepteur de télécommande.

L'invention a également pour objet un ensemble de récepteurs comprenant un récepteur nominal de signaux radiofréquence et un récepteur redondant de signaux radiofréquence, le récepteur redondant étant un récepteur selon l'invention.

L'invention a également pour objet un satellite équipé d'un récepteur selon l'invention.

L'invention a également pour objet un système d'acquisition d'un spectre de puissance d'un signal d'entrée d'un récepteur comprenant un récepteur selon l'invention et des moyens de commande aptes à générer et à envoyer au récepteur un ensemble de commandes d'acquisition de puissance comprenant des commandes de fréquence successives envoyées au dispositif de pilotage, les commandes de fréquence étant définies de façon que le dispositif de pilotage règle la fréquence de réception du récepteur sur des fréquences d'acquisition successives délimitant et jalonnant une bande de fréquence d'acquisition et étant espacées deux à deux du pas d'acquisition, l'ensemble de commandes d'acquisition comprenant en outre une commande de largeur de bande de filtrage envoyée aux moyens de réglage pour régler la largeur de la bande passante de l'ensemble de filtrage sur une largeur d'acquisition prédéterminée pendant que le dispositif de pilotage règle la fréquence de réception du récepteur sur les fréquences d'acquisition successives.

De cette façon, les moyens d'acquisition délivrent une mesure de puissance à chaque fois que le récepteur règle sa fréquence de réception sur une fréquence d'acquisition, les mesures de puissance étant réalisées sur des bandes de fréquence élémentaires présentant une largeur égale à la largeur d'acquisition.

Avantageusement, les moyens de commande sont configurés de façon à générer des commandes d'acquisition de spectre dans lesquelles la largeur d'acquisition est au moins égale au pas d'acquisition.

Avantageusement, les moyens de commande sont configurés de façon à générer des commandes d'acquisition de spectre dans lesquelles la largeur d'acquisition est égale au pas d'acquisition.

Avantageusement, les moyens de commande comprennent des moyens de calcul embarqués à bord du satellite et sont aptes à générer l'ensemble des commandes d'acquisition de spectre à partir d'un premier ensemble de commandes préalablement reçues par les moyens de calcul embarqués et définissant la bande de fréquence d'acquisition et la largeur d'acquisition et/ou le pas d'acquisition.

Avantageusement, le récepteur est un récepteur redondant.

Avantageusement, le récepteur comprend un circuit de démodulation permettant de démoduler le signal, le circuit de démodulation comprenant un autre filtre passe-bande permettant de limiter la bande de fréquence de bruit du premier signal, l'ensemble de filtrage étant distinct dudit autre filtre passe-bande.

Avantageusement, le système comprend des moyens permettant d'envoyer lesdites mesures de puissance simultanément à une station au sol depuis le satellite.

L'invention a également pour objet un procédé d'acquisition d'un spectre de puissance de signaux reçus en entrée d'un récepteur, le procédé étant mis en oeuvre au moyen d'un système d'acquisition selon l'invention comprenant un récepteur selon l'invention, dans lequel on acquiert un spectre de puissance de signaux reçus par ledit récepteur au moyen d'un système d'acquisition selon l'invention, sur une bande de fréquence d'acquisition prédéfinie, comprenant :
- une étape de génération et d'envoi, au dispositif de pilotage, par les moyens de commande, des commandes de fréquence successives de façon que le dispositif de pilotage règle la fréquence de réception du récepteur sur des fréquences d'acquisition successives espacées deux à deux du pas d'acquisition,
- une étape de génération et d'envoi aux moyens de réglage, par les moyens de commande, d'une commande de largeur de bande de filtrage égale à une largeur d'acquisition prédéterminée,
- une étape de réglage de la largeur de la bande-passante de l'ensemble de filtrage sur la largeur d'acquisition, au moyen des moyens de réglage,
- une étape de balayage, lors de laquelle le dispositif de pilotage règle la fréquence de réception du récepteur sur les fréquences d'acquisition successives,
- et, à chaque fois que le récepteur règle sa fréquence de réception sur une fréquence d'acquisition, une étape de filtrage du premier signal au moyen de l'ensemble de filtrage, et une étape d'acquisition, au moyen des moyens d'acquisition de puissance, de la puissance du premier signal en sortie de l'ensemble de filtrage.

Avantageusement, la largeur d'acquisition est au moins égale au pas d'acquisition.

Avantageusement, les moyens de commande comprennent des moyens de calcul embarqués à bord du satellite apte à générer l'ensemble des commandes d'acquisition de spectre à partir d'un premier ensemble de commandes définissant la bande de fréquence d'acquisition et la largeur de bande élémentaire et/ou le pas d'acquisition, le procédé comprenant une étape préalable de génération et d'envoi, aux moyens de calcul, depuis une station au sol, du premier ensemble de commandes.

Avantageusement, le procédé comprend une étape de transmission des mesures de puissance à un émetteur embarqué à bord du satellite et une étape d'envoi simultané desdites mesures à une station au sol.

L'invention a également pour objet un procédé d'optimisation de la fréquence de réception du récepteur comprenant :
- au moins une étape d'acquisition d'un spectre selon le procédé d'acquisition selon l'invention,
- une étape d'identification d'une bande de fréquence vérifiant un critère de qualité spectrale prédéterminé à partir des mesures de puissance,
- une étape de génération d'une commande de fréquence destinée à régler la fréquence de réception du récepteur sur une fréquence comprise dans la bande de fréquence identifiée et une étape d'envoi de la commande de fréquence au dispositif de pilotage.

D'autres caractéristiques et avantages de l'invention apparaîtront à la lecture de la description détaillée qui suit, faite à titre d'exemple non limitatif et en référence aux dessins annexés dans lesquels :
- la figure 1 représente un bloc diagramme d'un exemple de récepteur selon l'invention,
- la figure 2 représente un bloc diagramme d'un ensemble de filtrage selon l'invention,
- la figure 3 représente schématiquement un système d'acquisition d'un spectre selon l'invention,
- la figure 4 représente les étapes d'un procédé d'acquisition d'un spectre selon l'invention.

D'une figure à l'autre, les mêmes éléments sont repérés par les mêmes références.

L'invention a pour objet un récepteur de signaux radiofréquences flexible en fréquence destiné à être installé à bord d'un satellite.

Par récepteur flexible en fréquence, on entend un récepteur présentant une fréquence de fonctionnement réglable pouvant prendre une pluralité de valeurs dans une plage de fréquence de fonctionnement ou n'importe quelle valeur de cette plage. Ce type de récepteur comprend des moyens de pilotage, ou dispositif de pilotage, permettant de régler la fréquence de réception du récepteur. Il peut s'agir d'un récepteur de télécommunication de type répéteur, d'un récepteur d'écartométrie d'un satellite dont la fonction est d'orienter une antenne satellite pour qu'elle pointe vers un point donné au sol.

Dans un mode de réalisation préféré, le récepteur est un récepteur de télécommande tel que défini précédemment. Le récepteur de télécommande intègre déjà dans son ASIC un filtre passe-bande présentant une largeur égale à la largeur de la modulation qu'il reçoit (c'est-à-dire à la largeur de la bande passante du signal utile) dans le but de mesurer le niveau de puissance reçu : il est aisé d'ajouter dans l'ASIC des filtres à des fins de mesure de spectre.

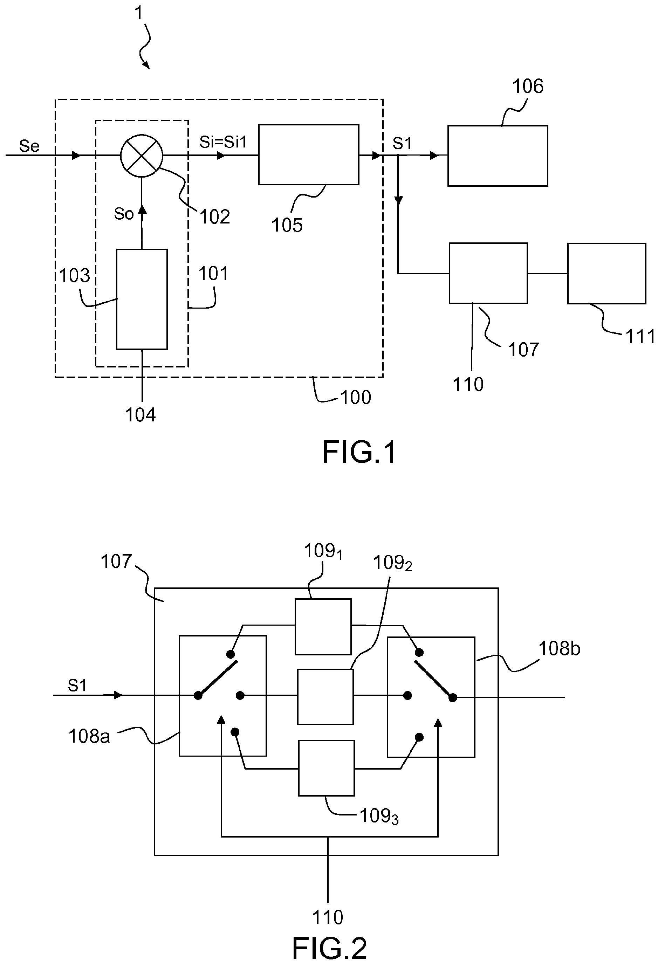

Sur la figure 1, on a représenté un blog diagramme d'un récepteur 1 de télécommande selon l'invention.

Il comprend un dispositif de pilotage en fréquence 100 permettant de régler, à partir d'une commande de fréquence, la fréquence de réception du récepteur sur la plage de fréquence de fonctionnement. La fréquence de réception FR est la fréquence sur laquelle est centrée la fenêtre de réception en fréquence du récepteur. La plage de fonctionnement d'un récepteur radiofréquence destiné à être installé sur un satellite est une large bande de l'ordre du GHz. Par exemple en bande Ku, la plage de fréquences de fonctionnement du récepteur s'étend entre 13750 MHz et 14500 MHz.

On peut, par exemple, balayer cette plage de fréquences de fonctionnement avec un pas compris entre 100Hz et 100kHz lors de l'acquisition d'un spectre. Ce balayage peut s'effectuer sur tout ou partie de la plage de fréquence.

Lorsque le récepteur balaye une bande de fréquences d'acquisition avec un pas d'acquisition, il règle sa fréquence de réception FR sur des fréquences consécutives de la bande de fréquence d'analyse espacées deux à deux du pas d'acquisition.

Comme visible sur la figure 1, le dispositif de pilotage 100 en fréquence du récepteur 1 reçoit un signal Se obtenu en entrée du récepteur et délivre un premier signal S1. Le premier signal correspond au signal d'entrée obtenu en entrée d'un récepteur, lorsque ce dernier fonctionne à la fréquence de réception, ce signal d'entrée étant filtré, et amplifié, et décalé en fréquence intermédiaire. Il faut remarquer que la fréquence intermédiaire peut, par exemple, être égale à zéro. On parle alors de conversion en bande de base.

Le dispositif de pilotage comprend un ensemble de conversion de fréquence délivrant à sa sortie un signal, appelé signal intermédiaire Si, à une fréquence intermédiaire prédéterminée FI (fixe).

L'ensemble de conversion de fréquence comprend une première chaine de conversion de fréquence 101 délivrant à sa sortie un signal centré sur une première fréquence intermédiaire FI1 prédéterminée qui est fixée pour le récepteur.

La première chaine de conversion 101 de fréquence comprend :
- un oscillateur local synthétisé 103, par exemple un oscillateur fractionnaire, apte à délivrer un signal de sortie So de l'oscillateur à une fréquence appelée fréquence d'oscillateur FO prise parmi un ensemble de fréquences d'oscillateur prédéterminé, à partir d'une commande en fréquence 104,
- un mélangeur 102 recevant le signal d'entrée Se du récepteur et le signal de sortie So de l'oscillateur 103 et délivrant un premier signal intermédiaire Si1 centré sur une première fréquence intermédiaire FI1.

Sur la réalisation de la figure 1, l'ensemble de conversion de fréquence comprend une seule chaine de conversion de fréquence qui est la première chaine de conversion de fréquence 101. La première fréquence intermédiaire FI1 est donc égale à la fréquence intermédiaire FI et le premier signal intermédiaire Si1 est le signal intermédiaire Si.

Etant donné que la fréquence intermédiaire FI est fixe, le fait de modifier la fréquence de l'oscillateur modifie la fréquence de réception du récepteur. Dans le cas où l'ensemble de conversion comprend une seule chaine de conversion, le pas du balayage en fréquence de l'oscillateur est par ailleurs égal au pas du balayage en fréquence de la fréquence de réception. La fréquence de réception est donnée par la formule suivante FR = FO ±FI. Autrement dit, balayer l'ensemble des fréquences d'oscillateur permet de balayer les fréquences de réception avec le même pas.

En variante, l'ensemble de conversion de fréquence comprend une pluralité de chaines de conversion de fréquence. Il comprend alors au moins une deuxième chaine de conversion, la deuxième chaîne de conversion reçoit en entrée la sortie de la première chaine de conversion.

Le dispositif de pilotage comprend également un ensemble de circuits de filtrage et d'amplification 105 permettant d'amplifier et de filtrer le signal en sortie de l'ensemble de chaine de conversion 101 et délivrant en sortie le premier signal s1.

Le récepteur comprend en outre :
- un circuit de démodulation 106 dont la fonction est de démoduler le signal en sortie de l'ensemble de chaine de conversion de fréquence pour récupérer les données comprises dans le signal d'entrée du récepteur,
- un ensemble de filtrage 107 permettant de limiter la bande de fréquence du premier signal S1 à une bande passante prédéfinie.

Le circuit de démodulation 106 est de manière générale un circuit dont la fonction est de démoduler un premier signal S1 représentatif du signal d'entrée du récepteur.

L'ensemble de filtrage 107 est du type filtre passe-bande. Il présente une bande passante réglable, appelée bande passante de l'ensemble de filtrage. L'ensemble de filtrage 107 permet de limiter la bande passante du premier signal S1 (représentatif du signal d'entrée du récepteur Se) à la bande passante de l'ensemble de filtrage.

Le dispositif comprend en outre des moyens de réglage, c'est-à-dire un dispositif de réglage de la largeur de la bande passante 108a, 108b, visibles sur la figure 2, permettant de régler la largeur de la bande passante de l'ensemble de filtrage à partir d'une commande de largeur de bande de filtrage 110. Le dispositif de réglage peut être, dans le cas d'un filtre numérique, un registre dont les coefficients sont modifiés pour modifier la bande passante. Dans le cas d'un filtre analogique, le dispositif de réglage est, par exemple, un circuit de commutation.

Autrement dit, la largeur de la bande passante de l'ensemble de filtrage peut prendre un ensemble de valeurs.

L'ensemble de filtrage 107 peut comprendre un filtre unique dont la bande passante est réglable par paramétrage de coefficients (cas des filtres numériques). La largeur de la bande passante peut être réglable continûment ou peut pouvoir prendre une pluralité de valeurs discrètes prédéterminées. Les moyens de pilotage, c'est-à-dire de réglage, de tels filtres, par exemple un registre, agissent sur les paramétrages de coefficients.

Il peut aussi comprendre une pluralité de filtres passe-bande présentant des bandes passantes de largeurs différentes. Les moyens de réglage comprennent alors des moyens de sélection, c'est-à-dire un dispositif de sélection, du filtre vers lequel est orienté le premier signal S1 comme dans l'exemple décrit ci-dessous.

Comme visible sur la figure 2, l'ensemble de filtrage 107 comprend une pluralité de filtres passe-bande 109ᵢ avec i= 1 à N où N est au moins égal à 2 et N = 3 dans l'exemple de la figure 2. Il comprend également des moyens de réglage de la largeur de la bande passante de l'ensemble de filtrage comprenant des premiers moyens d'orientation 108a, c'est-à-dire un premier dispositif d'orientation, permettant d'orienter le premier signal S1 vers un filtre passe-bande appelé filtre passe-bande sélectionné, pris parmi l'ensemble des filtres passe-bandes à partir d'une commande de largeur de bande 110. Les moyens de réglage comprennent également des deuxièmes moyens d'orientation 108b, c'est-à-dire un deuxième dispositif d'orientation, permettant de transmettre uniquement le signal en sortie du filtre sélectionné vers les moyens de mesure de la puissance 111. L'ensemble de filtrage et les moyens de réglage permettent de limiter la bande passante du premier signal S1 à la bande passante du filtre passe-bande sélectionné selon la résolution nécessaire. Les moyens 108a et 108b sont ici de type interrupteur multi-positions. Les dispositifs d'orientation sont, par exemple, des circuits de commutation.

Le récepteur comprend également des moyens d'acquisition de puissance 111, c'est-à-dire un dispositif d'acquisition de puissance, permettant de délivrer une mesure de la puissance du premier signal S1 en sortie de l'ensemble de filtrage 107, passe-bande. Le dispositif d'acquisition de puissance est par exemple un circuit de détection de puissance analogique ou un calculateur dans le cas numérique. Autrement dit, à chaque fois que le récepteur règle sa fréquence de réception sur une fréquence de fonctionnement, les moyens d'acquisition de puissance 111 réalisent l'acquisition de la puissance reçue par le récepteur sur une bande de fréquence de largeur égale à la largeur de la bande passante de l'ensemble de filtrage telle que réglée par les moyens de réglage.

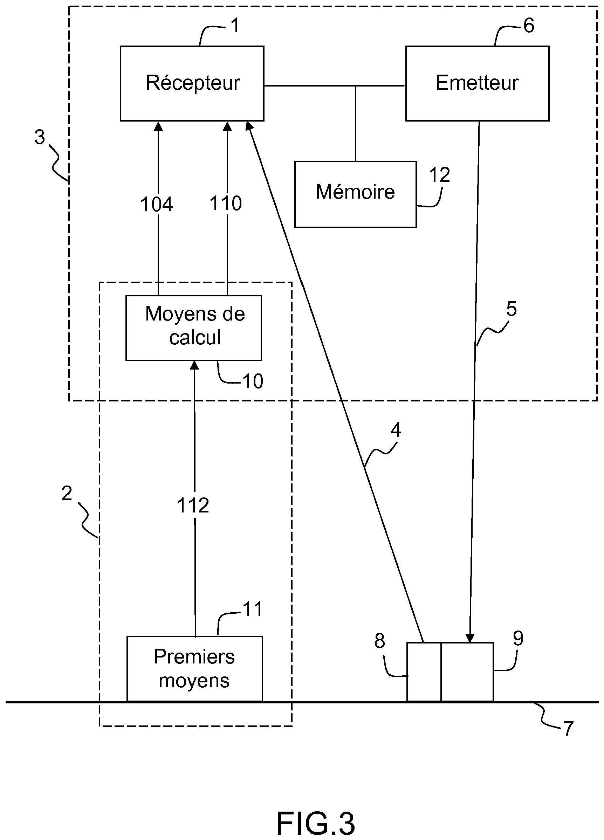

L'ensemble de filtrage 107 est configuré de façon que la mesure de puissance soit représentative de la puissance du signal d'entrée, dans la bande passante du filtre passe-bande sélectionné, centrée sur la fréquence de réception du récepteur. Sur la réalisation des figures 1 et 3, cela implique que les filtres passe-bande soient centrés sur la fréquence intermédiaire FI si la fréquence intermédiaire est non nulle. Autrement dit, les bandes passantes sont centrées sur la fréquence intermédiaire. Dans le cas où la fréquence intermédiaire est nulle, le filtrage est effectué par des filtres passe-bas.

Le récepteur selon l'invention offre la possibilité, en réalisant une commande intelligente conjointe des moyens de pilotage et des moyens de réglage 108a, 108b de la bande passante de mesurer le spectre de puissance du signal reçu par le récepteur, sur la totalité de sa plage de fréquence de fonctionnement de manière continue et, ce avec plusieurs degrés de précision ou finesses d'analyse. La continuité du spectre est obtenue en réglant la bande passante de l'ensemble de filtrage 107 sur une bande passante au moins égale au pas d'acquisition.

Par conséquent, le récepteur permet de réaliser une vraie fonction d'analyseur de spectre. En installant ce type de récepteur à bord d'un satellite, il n'est plus nécessaire d'y installer un équipement dédié à l'analyse de ce spectre.

En balayant la plage de fréquences de fonctionnement du récepteur avec un pas d'acquisition prédéterminé et en choisissant une bande passante de largeur égale au pas de balayage, on réalise le spectre le plus fin possible pour ce pas. En balayant la bande de fonctionnement du récepteur avec le pas de balayage et en choisissant un filtre passe-bande de largeur supérieure au pas de balayage, on obtient un spectre un peu moins fin, c'est-à-dire lissé ou redondant. Il faut noter que les récepteurs de télécommande présentent classiquement un dispositif de pilotage de la fréquence du récepteur, un filtre passe-bande et éventuellement des moyens d'acquisition de la puissance sur une bande présentant la largeur de la bande passante de ce filtre. La bande passante du filtre passe-bande est de l'ordre de 1MHz (pour un classique récepteur à modulation de fréquence) ce qui correspond à la largeur de bande du signal utile de télécommande qui est envoyé au récepteur dans les conditions normales d'utilisation. Toutefois, ce filtre passe-bande ne permet pas de réaliser une analyse spectrale fine dans la bande de fréquence de fonctionnement du récepteur.

Ces moyens d'acquisition de la fréquence permettent de mesurer la puissance du signal utile de télécommande reçu par le récepteur de télécommande dans la bande de fréquence utile du récepteur afin de vérifier que le niveau du signal utile reçu est supérieur à un seuil prédéterminé.

Le filtre passe-bande a une fonction première qui est de limiter la bande de bruit du signal reçu pour optimiser la démodulation du signal utile. Sa bande passante est la bande passante du signal utile. Ce filtre passe-bande non représenté est disposé dans la chaine de démodulation 106.

Selon l'invention le récepteur comprend, soit au moins un filtre passe-bande supplémentaire dont la bande passante peut être fixe ou réglable, soit un unique filtre passe-bande mais dont la bande passante est nécessairement réglable. Dans le premier cas, le récepteur selon l'invention comprend donc au moins un filtre passe-bande qui n'est plus dédié à la mesure de la puissance du signal utile mais surtout qui n'est plus dédié à la limitation de la bande de fréquence de bruit du signal reçu pour optimiser la démodulation du signal. Le filtre passe-bande supplémentaire dont la bande passante est réglable est dédié au tracé d'un spectre de puissance. Dans ce premier cas, le filtre passe-bande permettant de limiter la bande de fréquence de bruit pour optimiser la démodulation du premier signal est intégré dans le circuit de démodulation 106. Dans ce cas, le filtre passe-bande dont la bande passante est réglable, c'est-à-dire l'ensemble de filtrage 107 est distinct du filtre passe bande compris dans le circuit de démodulation 106. Autrement dit, l'ensemble de filtrage 107 est situé en dehors du circuit de démodulation 106. La bande passante du filtre passe-bande qui est intégré dans le circuit de démodulation 106 est fixe. Le récepteur selon l'invention permet à la fois de réaliser la mesure d'un spectre de puissance et de réaliser sa fonction de démodulation du signal reçu.

Avantageusement, l'ensemble de filtrage 107 est configuré de façon à pouvoir présenter au moins une bande passante de largeur inférieure à la largeur de bande passante du signal utile envoyé au récepteur dans les conditions normales d'utilisation et de préférence comprise entre 100 Hz et 100kHz.

Avantageusement, l'ensemble de filtrage 107 présente une bande passante présentant une largeur de bande passante réglable pouvant prendre un ensemble de valeurs comprenant une valeur au moins 10 fois plus faible que la largeur de la bande passante du signal utile. Cette caractéristique permet d'obtenir un spectre présentant une bonne résolution en choisissant cette largeur de bande passante et en balayant les fréquences avec un pas égal à cette bande passante.

L'invention a également pour objet un ensemble de récepteurs comprenant un récepteur nominal de signaux radiofréquence et un récepteur redondant de signaux radiofréquence. Le récepteur redondant est destiné à remplacer le récepteur nominal lorsque ce dernier est défaillant. Avantageusement, le récepteur redondant est le récepteur de radiofréquence. Cette caractéristique permet, par une commande appropriée conjointe des moyens de pilotage et des moyens de réglage, d'acquérir le spectre de puissance des signaux reçus par le récepteur, pendant ou en dehors du fonctionnement du récepteur.

En variante, le récepteur nominal est un récepteur selon l'invention. Il est possible d'acquérir le spectre de puissance des signaux reçus par le récepteur utile uniquement en dehors du fonctionnement du récepteur c'est-à-dire lorsque ce dernier ne reçoit pas de signaux de télécommande (dans le cas d'un récepteur de télécommande).

Sur la figure 3, on a représenté un système d'acquisition d'un spectre de puissance des signaux reçus par un récepteur selon l'invention.

Ce système comprend :
- un récepteur 1 selon l'invention embarqué à bord d'un satellite 3,
- des moyens de commande 2, c'est-à-dire un dispositif de commande, aptes à générer et à envoyer, au récepteur 1 un ensemble de commandes d'acquisition d'un spectre pour que le récepteur acquiert des mesures de puissances sur une bande de fréquence d'acquisition, correspondant à tout ou partie de la bande de fréquence de fonctionnement, en balayant ladite bande de fréquence d'acquisition avec un pas d'acquisition, et en mesurant, pour chaque fréquence de réception du récepteur, la puissance du premier signal, sur une bande de fréquence d'acquisition élémentaire présentant une largeur égale à une largeur d'acquisition prise parmi les largeurs de bande que l'ensemble de filtrage peut présenter. L'ensemble de commandes d'acquisition comprend des commandes de fréquences successives 104 envoyées successivement au dispositif de pilotage, les fréquences de commandes étant définies de façon que le dispositif de pilotage 100 règle la fréquence de réception du récepteur 1 sur des fréquences successives délimitant et jalonnant la bande de fréquence d'acquisition et étant espacées deux à deux du pas d'acquisition. L'ensemble de commandes d'acquisition comprend en outre une commande 110 de largeur de bande de filtrage correspondant à la largeur d'acquisition.

Le système comprend une liaison de communication montante 4 entre la station au sol 7 et le satellite 3 permettant à la station au sol 7 d'envoyer des données au satellite 3. Il s'agit, par exemple, de la liaison de communication montante entre le récepteur 1 et un émetteur 8 situé dans une station au sol 7 ou entre un autre récepteur et un émetteur 8 situé dans une station au sol 7.

Il comprend également une liaison de communication descendante 5 permettant à un émetteur 6 embarqué à bord du satellite 3 d'envoyer des données à la station au sol. L'émetteur est, par exemple, un émetteur de télémesure TTC ou TCR situé à bord du satellite 3. L'émetteur est apte à envoyer des données à un récepteur 9 situé dans une station au sol 7.

Avantageusement, les moyens de commande 2 sont configurés de façon à générer des commandes d'acquisition de spectre 104, 110 telles que la largeur d'acquisition est au moins égale au pas d'acquisition.

Avantageusement, les moyens de commande 2 sont configurés de façon à générer des commandes d'acquisition de spectre dans lesquelles largeur d'acquisition est égale au pas d'acquisition, le récepteur comprenant un filtre passe-bande égal audit pas d'acquisition. Cela permet d'obtenir un spectre de puissance non redondant et continu sur la bande de fréquence d'acquisition.

Les moyens de commande 2 comprennent des moyens de calcul 10 embarqués à bord du satellite. Il s'agit, par exemple, d'un module de calcul intégré au récepteur, d'une fonction de calcul ou d'un calculateur de bord embarqué à bord du satellite comme représenté sur la figure 3. Autrement dit, les moyens de commande comprennent au moins un calculateur 10.

Les moyens de calcul 10 sont aptes à générer l'ensemble de commandes d'acquisition de spectre à partir d'un premier ensemble de commandes 112 préalablement reçues par les moyens de calcul 10 et définissant la bande de fréquence d'acquisition (par exemple la fréquence minimale et la fréquence maximale) et une finesse de spectre.

La finesse du spectre correspond à la précision avec laquelle doit être réalisé le spectre. Il s'agit, par exemple, de la largeur de bande élémentaire. Le calculateur génère alors un pas d'acquisition au plus égal à cette largeur de bande. Il peut également s'agir du pas d'acquisition. Le calculateur génère alors une commande de largeur de bande de fréquence prise parmi les largeurs de bande de l'ensemble des filtres passe-bande au moins égale au pas. Le premier ensemble de commandes peut également comprendre une commande de l'heure à laquelle le calculateur doit débuter l'acquisition du spectre.

Avantageusement, les moyens de commande 2 comprennent des premiers moyens 11 installés dans une station de commande au sol 7 pour générer le premier ensemble de commandes 112. Les premiers moyens sont un premier dispositif par exemple un calculateur. Ce premier ensemble de commandes 112 étant envoyé aux moyens de calcul 10 via la liaison montante 4. La réception de ces commandes génère l'acquisition du spectre dans la bande d'acquisition définie au sol, instantanément ou à l'heure indiquée. En variante, les premiers moyens sont installés au sol en dehors de la station de commande 7. Ils sont reliés à la station de commande 7 via une liaison au sol. Il s'agit par exemple d'un calculateur installé dans un CCS (centre de contrôle satellite) où sont élaborés les signaux de télécommandes à destination du récepteur et où sont reçues les télémesures issues du récepteur. Ce CCS peut être relié à la station de commande 7 par réseau terrestre. La station de commande 7 reçoit les signaux de commande 112 via le réseau, les module et émet les émets via la liaison 4.

La génération des commandes de fréquence et de largeur de bande de filtrage à bord du satellite permet de réaliser l'acquisition d'un spectre rapidement. En effet, les commandes en fréquence successives ne sont pas envoyées directement depuis la station au sol vers le récepteur ou vers un calculateur de bord ce qui serait très long et contraignant puisque cela suppose de ne pas charger la liaison montante lors de l'envoi de ces commandes.

En variante, les moyens de commande 2 sont intégrés dans la station au sol. L'ensemble de commandes d'acquisition est envoyé, par la station au sol au récepteur, via la liaison montante.

En variante, les moyens de commande sont intégrés à bord du satellite.

Avantageusement, le récepteur 1 comprend des moyens d'envoi, c'est-à-dire un dispositif d'envoi, permettant d'envoyer simultanément les mesures de puissance acquises pendant l'acquisition du spectre à une station au sol depuis le satellite. Ces moyens comprennent avantageusement des moyens de stockage de données 12, c'est-à-dire une mémoire, permettant de stocker les mesures avant de les envoyer au sol via l'émetteur. Cela permet de limiter au minimum l'occupation de la bande passante et d'augmenter la rapidité du procédé.

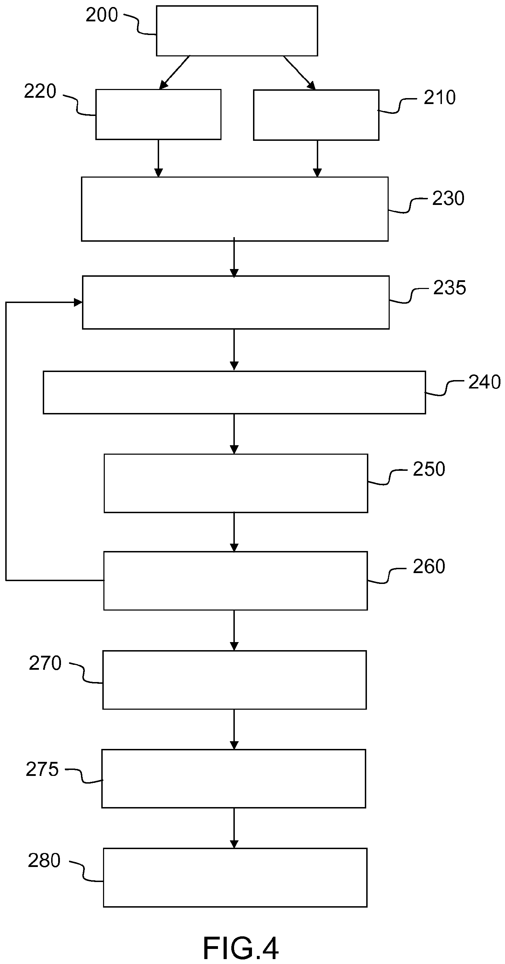

L'invention a également pour objet un procédé d'acquisition d'un spectre des signaux reçu par le récepteur au moyen d'un système d'acquisition selon l'invention sur une bande de fréquence d'acquisition correspondant à tout ou partie de la plage de fréquence de fonctionnement du récepteur. Le procédé comprend, comme visible sur la figure 4,
- une étape 210 de génération et d'envoi au dispositif de pilotage, par les moyens de commande 2, des commandes en fréquence successives de façon qu'il règle la fréquence de réception du récepteur sur des fréquences d'acquisition successives de la bande de fréquence d'acquisition espacées deux à deux du pas d'acquisition,
- une étape 220 de génération et d'envoi aux moyens de réglage, par les moyens de commande 2, d'une commande de largeur de bande de filtrage égale à une largeur d'acquisition prédéterminée,
- une étape de réglage 230 de la largeur de la bande passante de l'ensemble de filtrage sur la largeur d'acquisition,
- une étape de balayage, lors de laquelle le dispositif de pilotage règle 235 la fréquence de réception du récepteur sur les fréquences d'acquisition successives,
- et, à chaque fois que le récepteur règle 235 sa fréquence de réception, sur une fréquence d'acquisition, une étape de filtrage 250 du premier signal au moyen de l'ensemble de filtrage 107, et une étape d'acquisition 260, au moyen des moyens d'acquisition de puissance 111, de la puissance du premier signal en sortie de l'ensemble de filtrage.

Le procédé comprend également une étape 240 de transformation du signal reçu en entrée du récepteur en un premier signal S1 lorsque le récepteur est tel que représenté sur la figure 1.

Lors de l'étape de balayage, le récepteur règle par exemple d'abord sa fréquence sur la fréquence minimale et incrémente sa fréquence avec le pas d'acquisition jusqu'à la fréquence maximale.

La largeur d'acquisition est avantageusement au moins égale au pas d'acquisition. Elle est avantageusement égale au pas d'acquisition.

Avantageusement, le procédé comprend une étape préalable de génération et d'envoi 200 du premier ensemble de commandes aux moyens de calcul depuis une station au sol. En variante, les commandes d'acquisition de spectre sont générées dans une station au sol et envoyées au récepteur depuis la station au sol.

A la fin du procédé on obtient des mesures de puissance représentatives de la puissance des signaux reçus par le satellite dans la bande de fréquence d'acquisition sur des bandes d'analyse élémentaires présentant une largeur égale à la largeur d'acquisition et étant centrées autour des fréquences de fonctionnement balayées par le récepteur lors de cette acquisition.

On obtient donc la mesure de la puissance du bruit ambiant dans l'environnement du récepteur sur la bande de fréquence d'acquisition lorsque l'acquisition du spectre est réalisée en dehors des périodes d'acquisition d'un signal utile par le récepteur utile et la mesure de puissance du bruit ambiant ainsi que la mesure de puissance du signal reçu lorsque la mesure du spectre est réalisée, pendant l'acquisition d'un signal utile (ici de télécommande), par un récepteur redondant.

Le procédé comprend avantageusement une étape de transmission 270 des mesures de puissance à un émetteur embarqué à bord du satellite, par exemple un émetteur TTC, directement ou via le calculateur embarqué à bord du satellite, et une étape d'envoi 280 desdites mesures à une station au sol via la liaison descendante 5. Les mesures sont avantageusement envoyées de façon simultanée à la station au sol. Ces mesures sont alors mémorisées 275 à bord du satellite dans les moyens de stockage 12, et sont envoyés en même temps à la station à bord. Cela permet de limiter l'occupation de la liaison descendante.

Le spectre est obtenu en normalisant ces mesures en densités spectrales, c'est-à-dire en les transformant en densités spectrales de puissance sur des bandes élémentaires centrées sur les fréquences de fonctionnement balayées par le récepteur lors de cette acquisition et présentant une largeur égale à la largeur d'acquisition. Cette opération est une opération bien connue de l'homme du métier.

Avantageusement, l'invention a également pour objet un procédé d'optimisation de la fréquence du récepteur à partir des mesures de puissance. L'utilisation des mesures de puissance permet d'identifier les fréquences optimales, par exemple, non brouillées, sur lesquelles régler la fréquence de réception du récepteur.

Le procédé comprend :
- au moins une étape d'acquisition d'un spectre selon le procédé d'acquisition selon l'invention,
- une étape d'identification d'une bande de fréquence vérifiant un critère de qualité spectrale prédéterminé à partir des mesures de puissance,
- une étape de génération d'une commande de fréquence destinée à régler la fréquence de réception du récepteur sur une fréquence comprise dans la bande de fréquence identifiée et une étape d'envoi de la commande de fréquence au dispositif de pilotage.

Le procédé comprend avantageusement une étape de tracé du (ou des) spectre(s) sur la bande de fréquence d'acquisition à partir desdites mesures,

Le critère de qualité spectrale peut être un critère d'absence d'occupation ou de bruitage d'une bande de fréquence. Avantageusement cette bande vérifie un second critère de largeur de bande devant être au moins égale à la largeur de la bande passante du signal utile devant être envoyé au récepteur dans les conditions normales d'utilisation. La commande de fréquence est définie de façon que le dispositif de pilotage règle la fréquence du récepteur au centre de la bande de fréquence identifiée.

Avantageusement, ces étapes sont réalisées au niveau de la station au sol.

Une bande de fréquence non bruitée est par exemple une bande de fréquence dans laquelle la densité spectrale de puissance est inférieure à un seuil prédéterminé ou une bande de fréquence dans laquelle le spectre est conforme à un spectre de référence que le récepteur est censé recevoir lors des conditions normales de fonctionnement.

Avantageusement, le procédé comprend une pluralité d'étapes successives d'acquisition du spectre sur la bande. L'identification de la bande de fréquence non occupée ou non bruitée est réalisée à partir des différents spectres. Le tracé de plusieurs spectres permet par exemple de calculer le maximum de la densité spectrale sur une durée donnée ou bien la moyenne de la densité spectrale sur une durée donnée.

## Revendications

1. Récepteur (1) de signaux radiofréquence destiné à être installé sur un satellite comprenant :
- un dispositif de pilotage (100) en fréquence du récepteur permettant de régler, à partir d'une commande de fréquence (104), la fréquence de réception du récepteur, **caractérisé en ce qu'**il comprend en outre :
- un ensemble de filtrage (107) du type filtre passe-bande présentant une bande passante, appelée bande passante de l'ensemble de filtrage, présentant une largeur de bande passante réglable pouvant prendre un ensemble de valeurs, l'ensemble de filtrage (107) permettant de limiter la bande passante d'un premier signal (S1), délivré par le dispositif de pilotage et représentatif d'un signal d'entrée du récepteur, à la bande passante de l'ensemble de filtrage,
- de moyens de réglage (108a, 108b) permettant de régler la largeur de la bande passante de l'ensemble de filtrage à partir d'une commande de largeur de bande de filtrage,
- des moyens d'acquisition de puissance (111) permettant de délivrer une mesure de la puissance du premier signal en sortie de l'ensemble de filtrage (107).

2. Récepteur selon la revendication 1, dans lequel le dispositif de pilotage comprend un ensemble de conversion de fréquence délivrant à sa sortie le premier signal (S1) centré sur une fréquence intermédiaire fixe, l'ensemble de conversion de fréquence comprenant une première chaine de conversion de fréquence (101) recevant le signal d'entrée (Se) du récepteur et délivrant à sa sortie un premier signal intermédiaire centré sur une première fréquence intermédiaire fixe, la première chaine de conversion de fréquence (101) comprenant :
- un oscillateur local synthétisé (103) apte à délivrer un signal de sortie (So) de l'oscillateur à une fréquence appelée fréquence d'oscillateur prise parmi un ensemble de fréquences d'oscillateur prédéterminées à partir d'une commande en fréquence (104),
- un mélangeur (102) recevant le signal reçu en entrée du récepteur (se) et le signal de sortie de l'oscillateur (103) et délivrant ledit premier signal intermédiaire (si1) centré sur une première fréquence intermédiaire.

3. Récepteur selon la revendication 2, dans lequel l'ensemble de filtrage comprend au moins un filtre passe-bande, ledit filtre passe-bande étant centré sur la fréquence intermédiaire.

4. Récepteur selon la revendication 2, dans lequel l'ensemble de filtrage comprend au moins un filtre passe-bande, ledit filtre passe-bande étant un filtre passe-bas lorsque la fréquence intermédiaire est égale à 0Hz.

5. Récepteur selon l'une quelconque des revendications précédentes, dans lequel le récepteur est un récepteur de télécommande.

6. Récepteur selon l'une quelconque des revendications précédentes, comprenant un circuit de démodulation (106) permettant de démoduler le signal, le circuit de démodulation comprenant un autre filtre passe-bande permettant de limiter la bande de fréquence de bruit du premier signal, l'ensemble de filtrage étant distinct dudit autre filtre passe-bande.

7. Récepteur selon la revendication 6 présentant une bande passante présentant une largeur de bande passante réglable pouvant prendre un ensemble de valeurs comprenant une valeur au moins 10 fois plus faible qu'une largeur de la bande passante de l'autre filtre passe bande.

8. Ensemble de récepteurs comprenant un récepteur nominal de signaux radiofréquence et un récepteur redondant de signaux radiofréquence, le récepteur redondant étant un récepteur selon l'une quelconque des revendications 1 à 7.

9. Satellite équipé d'un récepteur selon l'une quelconque des revendications 1 à 7 ou d'un ensemble de récepteurs selon la revendication 8.

10. Système d'acquisition d'un spectre de puissance d'un signal d'entrée du récepteur comprenant un récepteur (1) selon l'une quelconque des revendications 1 à 7, et des moyens de commande (2) aptes à générer et à envoyer au récepteur un ensemble de commandes d'acquisition de puissance comprenant des commandes de fréquence (104) successives envoyées au dispositif de pilotage, les commandes de fréquence étant définies de façon que le dispositif de pilotage règle la fréquence de réception du récepteur sur des fréquences d'acquisition successives délimitant et jalonnant une bande de fréquence d'acquisition et étant espacées deux à deux du pas d'acquisition, l'ensemble de commandes d'acquisition comprenant en outre une commande de largeur de bande de filtrage (110) envoyée aux moyens de réglage (108a, 108b) pour régler la largeur de la bande passante de l'ensemble de filtrage (107) sur une largeur d'acquisition prédéterminée pendant que le dispositif de pilotage règle la fréquence de réception du récepteur sur les fréquences d'acquisition successives.

11. Système selon la revendication précédente, dans lequel les moyens de commande (2) sont configurés de façon à générer des commandes d'acquisition de spectre dans lesquelles la largeur d'acquisition est au moins égale au pas d'acquisition.

12. Système selon la revendication précédente, dans lequel les moyens de commande (2) sont configurés de façon à générer des commandes d'acquisition dans lesquelles la largeur d'acquisition est égale au pas d'acquisition.

13. Système selon la revendication précédente, dans lequel les moyens de commande (2) comprennent des moyens de calcul (10) embarqués à bord du satellite et étant aptes à générer l'ensemble des commandes d'acquisition de spectre à partir d'un premier ensemble de commandes (112) préalablement reçues par les moyens de calcul (10) embarqués et définissant la bande de fréquence d'acquisition et la largeur d'acquisition et/ou le pas d'acquisition.

14. Système selon l'une quelconque des revendications 10 à 13, dans lequel le récepteur est un récepteur redondant.

15. Système selon l'une quelconque des revendications 10 à 14, comprenant des moyens (12) permettant d'envoyer lesdites mesures de puissance simultanément à une station au sol depuis le satellite.

16. Procédé d'acquisition d'un spectre de puissance le procédé étant mis en œuvre au moyen d'un système d'acquisition selon l'une quelconque des revendications 10 à 15 comprenant un récepteur selon l'une quelconque des revendication 1 à 7, dans lequel on acquiert un spectre de puissance de signaux reçus par ledit récepteur sur une bande de fréquence d'acquisition prédéfinie, le procédé comprenant :
- une étape de génération et d'envoi au dispositif de pilotage (210), par les moyens de commande, des commandes en fréquence successives de façon que le dispositif de pilotage règle la fréquence de réception du récepteur sur des fréquences d'acquisition successives espacées deux à deux du pas d'acquisition,
- une étape de génération et d'envoi (220) aux moyens de réglage, par les moyens de commande, d'une commande de largeur de bande de filtrage égale à une largeur d'acquisition prédéfinie,
- une étape (230) de réglage de la largeur de la bande-passante de l'ensemble de filtrage sur la largeur d'acquisition, au moyen des moyens de réglage (108a, 108b),
- une étape de balayage, lors de laquelle le dispositif de pilotage règle (235) la fréquence de réception du récepteur sur les fréquences d'acquisition successives,
- et, à chaque fois que le récepteur règle (235) sa fréquence de réception sur une fréquence d'acquisition, une étape de filtrage (250) du premier signal au moyen de l'ensemble de filtrage (107), et une étape d'acquisition (260), au moyen des moyens d'acquisition de puissance (111), de la puissance du premier signal en sortie de l'ensemble de filtrage.

17. Procédé selon la revendication précédente, dans lequel la largeur de d'acquisition est au moins égale au pas d'acquisition.

18. Procédé selon l'une quelconque des revendications 16 à 17, dans lequel les moyens de commande (2) comprennent des moyens de calcul (10) embarqués à bord du satellite aptes à générer l'ensemble des commandes d'acquisition de spectre à partir d'un premier ensemble de commandes définissant la bande de fréquence d'acquisition et la largeur de bande élémentaire et/ou le pas d'acquisition, le procédé comprenant une étape préalable (200) de génération et d'envoi, aux moyens de calcul (200), depuis une station au sol, du premier ensemble de commandes.

19. Procédé selon l'une quelconque des revendications 16 à 18, comprenant une étape de transmission des mesures de puissance à un émetteur embarqué à bord du satellite et une étape d'envoi simultané desdites mesures à une station au sol.

20. Procédé d'optimisation de la fréquence de réception du récepteur comprenant :
- au moins une étape d'acquisition d'un spectre selon le procédé d'acquisition selon l'une quelconque des revendications 16 à 19,
- une étape d'identification d'une bande de fréquence vérifiant un critère de qualité spectrale prédéterminé à partir des mesures de puissance,
- une étape de génération d'une commande de fréquence destinée à régler la fréquence de réception du récepteur sur une fréquence comprise dans la bande de fréquence identifiée et une étape d'envoi de la commande de fréquence au dispositif de pilotage.

## Patentansprüche

1. Hochfrequenzsignalempfänger (1) zur Installation auf einem Satelliten, der Folgendes umfasst:
- eine Frequenzsteuerungsvorrichtung (100) für den Empfänger, so dass auf der Basis eines Frequenzbefehls (104) die Empfangsfrequenz des Empfängers geregelt werden kann, **dadurch gekennzeichnet, dass** er ferner Folgendes umfasst:
- einen Filtersatz (107) des Bandpassfiltertyps mit einem Passband, Passband des Filtersatzes genannt, mit einer regelbaren Passbandbreite, die einen Satz von Werten annehmen kann, wobei der Filtersatz (107) die Begrenzung eines Passbandes eines ersten Signals (S1), das von der Steuervorrichtung geliefert wird und für ein Eingangssignal des Empfängers repräsentativ ist, auf das Passband des Filtersatzes zulassen kann,
- Regelmittel (108a, 108b), die es zulassen, die Breite des Passbandes des Filtersatzes durch einen Filterbandbreitenbefehl zu regeln,
- Leistungserfassungsmittel (111) zum Liefern eines Messwertes der Leistung des ersten Signals zum Ausgang des Filtersatzes (107).

2. Empfänger nach Anspruch 1, bei dem die Steuerungsvorrichtung einen Frequenzumwandlungssatz umfasst, der an seinem Ausgang das erste Signal (S1) anlegt, zentriert auf einer festen Zwischenfrequenz, wobei der Frequenzumwandlungssatz eine erste Frequenzumwandlungskette (101) umfasst, die das Eingangssignal (Se) des Empfängers empfängt und an seinem Ausgang ein erstes Zwischensignal anlegt, zentriert auf einer ersten festen Zwischenfrequenz, wobei die erste Frequenzumwandlungskette (101) Folgendes umfasst:
- einen synthetisierten Lokaloszillator (103), der ein Ausgangssignal (So) des Oszillators mit einer Oszillatorfrequenz genannten Frequenz anlegen kann, ausgewählt aus einem Satz von vorbestimmten Oszillatorfrequenzen auf der Basis eines Frequenzbefehls (104),
- einen Mischer (102), der das am Eingang des Empfängers (se) empfangene Signal und das Ausgangssignal des Oszillators (103) empfängt und das erste Zwischensignal (si1) anlegt, das auf einer ersten Zwischenfrequenz zentriert ist.

3. Empfänger nach Anspruch 2, bei dem der Filtersatz mindestens ein Bandpassfilter umfasst, wobei das Bandpassfilter auf der Zwischenfrequenz zentriert ist.

4. Empfänger nach Anspruch 2, bei dem der Filtersatz mindestens ein Bandpassfilter umfasst, wobei das Bandpassfilter ein Tiefpassfilter ist, wenn die Zwischenfrequenz gleich 0 Hz ist.

5. Empfänger nach einem der vorherigen Ansprüche, wobei der Empfänger ein Fernbedienungsempfänger ist.

6. Empfänger nach einem der vorherigen Ansprüche, der eine Demodulationsschaltung (106) umfasst, die es zulässt, das Signal zu demodulieren, wobei die Demodulationsschaltung ein weiteres Bandpassfilter umfasst, mit dem das Rauschfrequenzband des ersten Signals begrenzt werden kann, wobei der Filtersatz von dem anderen Bandpassfilter getrennt ist.

7. Empfänger nach Anspruch 6 mit einem Passband, das eine regelbare Passbandbreite hat, die einen Satz von Werten annehmen kann, der einen Wert umfasst, der mindestens zehnmal kleiner ist als eine Passbandbreite des anderen Bandpassfilters.

8. Empfängersatz, umfassend einen nominalen Hochfrequenzsignalempfänger und einen redundanten Hochfrequenzsignalempfänger, wobei der redundante Empfänger ein Empfänger nach einem der Ansprüche 1 bis 7 ist.

9. Satellit, ausgestattet mit einem Empfänger nach einem der Ansprüche 1 bis 7 oder mit einem Empfängersatz nach Anspruch 8.

10. System zum Erfassen eines Leistungsspektrums eines Eingangssignals des Empfängers, umfassend einen Empfänger (1) nach einem der Ansprüche 1 bis 7, und Befehlsmittel (2) zum Erzeugen und Senden eines Satzes von Leistungserfassungsbefehlen zu dem Empfänger, umfassend zur Steuerungsvorrichtung gesendete sukzessive Frequenzbefehle (104), wobei die Frequenzbefehle so definiert sind, dass die Steuerungsvorrichtung die Empfangsfrequenz des Empfängers auf sukzessive Erfassungsfrequenzen regelt, die ein Erfassungsfrequenzband begrenzen und markieren und um jeweils zwei des Erfassungsschritts beabstandet sind, wobei der Satz von Erfassungsbefehlen ferner einen Filterbandbreitenbefehl (110) umfasst, der zu den Regelmitteln (108a, 108b) gesendet wird, um die Passbandbreite des Filtersatzes (107) auf eine vorbestimmte Erfassungsbreite zu regeln, während die Steuerungsvorrichtung die Empfangsfrequenz des Empfängers auf die sukzessiven Erfassungsfrequenzen regelt.

11. System nach dem vorherigen Anspruch, bei dem die Steuermittel (2) so konfiguriert sind, dass sie Spektrumserfassungsbefehle erzeugen, in denen die Erfassungsbreite mindestens gleich dem Erfassungsschritt ist.

12. System nach dem vorherigen Anspruch, bei dem die Steuermittel (2) so konfiguriert sind, dass sie die Erfassungsbefehle erzeugen, in denen die Erfassungsbreite gleich dem Erfassungsschritt ist.

13. System nach dem vorherigen Anspruch, bei dem die Steuermittel (2) Rechenmittel (10) an Bord des Satelliten umfassen, die den Satz von Spektrumserfassungsbefehlen auf der Basis eines ersten Befehlssatzes (112) erzeugen können, der zuvor von den Rechenmitteln (10) an Bord empfangen wurde und das Erfassungsfrequenzband und die Erfassungsbreite und/oder den Erfassungsschritt definiert.

14. System nach einem der Ansprüche 10 bis 13, bei dem der Empfänger ein redundanter Empfänger ist.

15. System nach einem der Ansprüche 10 bis 14, das Mittel (12) umfasst, mit denen die Messwerte vom Satelliten gleichzeitig zu einer Bodenstation gesendet werden können.

16. Verfahren zum Erfassen eines Leistungsspektrums, wobei das Verfahren mittels eines Erfassungssystems nach einem der Ansprüche 10 bis 15 implementiert werden kann, umfassend einen Empfänger nach einem der Ansprüche 1 bis 7, wobei ein von dem Empfänger auf einem vordefinierten Erfassungsfrequenzband empfangenes Signalleistungsspektrum erfasst wird, wobei das Verfahren Folgendes beinhaltet:
- einen Schritt des Erzeugens und Sendens sukzessiver Frequenzbefehle zu der Steuerungsvorrichtung (210) durch die Befehlsmittel, so dass die Steuerungsvorrichtung die Empfangsfrequenz des Empfängers auf den zu jeweils zwei des Erfassungsschritts beabstandeten sukzessiven Erfassungsfrequenzen regelt,
- einen Schritt des Erzeugens und Sendens (220), durch die Steuermittel, eines Filterbandbreitenbefehls gleich einer vordefinierten Erfassungsbreite zu den Regelmitteln,
- einen Schritt (230) des Regelns der Passbandbreite der Filterbaugruppe auf der Erfassungsbreite mittels Regelmitteln (108a, 108b),
- einen Abtastschritt, bei dem die Steuerungsvorrichtung die Empfangsfrequenz des Empfängers auf den aufeinander folgenden Erfassungsfrequenzen regelt (235),
- und jedes Mal, wenn der Empfänger seine Empfangsfrequenz auf eine Erfassungsfrequenz regelt (235), einen Schritt (250) des Filterns des ersten Signals mit dem Filtersatz (107) und einen Schritt (260) des Erfassens der Leistung des ersten Signals, mit dem Leistungserfassungsmittel (111), am Ausgang des Filtersatzes.

17. Verfahren nach dem vorherigen Anspruch, bei dem die Erfassungsbreite mindestens gleich dem Erfassungsschritt ist.

18. Verfahren nach einem der Ansprüche 16 bis 17, bei dem die Steuermittel (2) Rechenmittel (10) an Bord des Satelliten umfassen, die den Satz von Spektrumserfassungsbefehlen auf der Basis eines ersten Befehlssatzes erzeugen können, der das Erfassungsfrequenzband und die Elementarbandbreite und/oder den Erfassungsschritt definieren, wobei das Verfahren einen Vorabschritt (200) des Erzeugens und Sendens des ersten Befehlssatzes zu den Rechenmitteln (200) von einer Bodenstation beinhaltet.

19. Verfahren nach einem der Ansprüche 16 bis 18, das einen Schritt des Übertragens von Leistungsmesswerten zu einem Sender an Bord des Satelliten und einen Schritt des gleichzeitigen Sendens der Messwerte zu einer Bodenstation beinhaltet.

20. Verfahren zum Optimieren der Empfangsfrequenz des Empfängers, das Folgendes beinhaltet:
- mindestens einen Schritt des Erfassens eines Spektrums gemäß dem Erfassungsverfahren nach einem der Ansprüche 16 bis 19,
- einen Schritt des Identifizierens eines Frequenzbandes, das ein auf der Basis der Leistungsmesswerte vorbestimmtes Spektralqualitätskriterium verifiziert,
- einen Schritt des Erzeugens eines Frequenzbefehls zum Regeln der Empfangsfrequenz des Empfängers auf eine das identifizierte Frequenzband umfassende Frequenz und einen Schritt des Sendens des Frequenzbefehls zur Steuerungsvorrichtung.

## Claims

1. A radiofrequency signal receiver (1) designed to be installed on board a satellite comprising:
- a device (100) for frequency controlling the receiver allowing the reception frequency of the receiver to be adjusted based on a frequency command (104), **characterized in that** it furthermore comprises:
- a filtering assembly (107) of the bandpass filter type exhibiting a bandwidth, referred to as bandwidth of the filtering assembly, having an adjustable width of the bandwidth able to take a set of values, the filtering assembly (107) allowing the bandwidth of a first signal (S1) delivered by the device for controlling the receiver and representative of the input signal of the receiver to be limited to the bandwidth of the filtering assembly,
- adjustment means (108a, 108b) allowing the width of the bandwidth of the filtering assembly to be adjusted using a filtering bandwidth control,
- power acquisition means (111) allowing a measurement of the power of the first signal to be delivered at the output of the filtering assembly (107).

2. The receiver according to claim 1, wherein the controlling device comprises a frequency conversion chain assembly delivering at its output the first signal (S1) centered on a fixed intermediate frequency, the frequency conversion chain assembly comprising a first frequency conversion chain (101) receiving the input signal (Se) of the receiver and delivering at its output a first intermediate signal centered on a first fixed intermediate frequency, the first frequency conversion chain (101) comprising:
- a synthesized local oscillator (103) designed to deliver an output signal (So) from the oscillator at a frequency referred to as oscillator frequency taken from amongst a set of predetermined oscillator frequencies based on a frequency control (104),
- a mixer (102) receiving the signal received at the input of the receiver (se) and the output signal from the oscillator (103) and delivering said first intermediate signal (si1) centered on a first intermediate frequency.

3. The receiver according to claim 2, in which the filtering assembly comprises at least one bandpass filter, said bandpass filter being centered on the intermediate frequency.

4. The receiver according to claim 2, in which the filtering assembly comprises at least one bandpass filter, said bandpass filter being a low-pass filter when the intermediate frequency is equal to 0Hz.

5. The receiver according to any one of the preceding claims, in which the receiver is a remote control receiver.

6. The receiver according to any one of the preceding claims, comprising a demodulation circuit (106) allowing the signal to be demodulated, the demodulation circuit comprising another bandpass filter allowing the noise frequency band of the first signal to be limited, the filtering assembly being distinct from said other bandpass filter.

7. The receiver according to claim 6, having a bandwidth with an adjustable width of the bandwidth able to take a set of values comprising a value at least 10 times lower than the width of the bandwidth of the other bandpass filter.

8. A set of receivers comprising a nominal radiofrequency signal receiver and a redundant radiofrequency signal receiver, the redundant receiver being a receiver according to any one of claims 1 to 7.

9. A satellite equipped with a receiver according to any one of claims 1 to 7 or with a set of receivers according to claim 8.

10. A system for acquiring a power spectrum of an input signal of the receiver comprising a receiver (1) according to any one of claims 1 to 7 and control means (2) capable of generating and sending to the receiver a set of power acquisition commands comprising successive frequency commands (104) sent to the control device, the frequency commands being defined in such a manner that the control device adjusts the reception frequency of the receiver to successive acquisition frequencies bounding and marking out an acquisition frequency band and being spaced out from the next by the acquisition step size, the set of acquisition commands furthermore comprising a filtering bandwidth control (110) sent to the adjustment means (108a, 108b) in order to adjust the width of the bandwidth of the filtering assembly (107) to a predetermined acquisition width while the control device adjusts the reception frequency of the receiver to the successive acquisition frequencies.

11. System according to the preceding claim, in which the control means (2) are configured so as to generate spectrum acquisition commands in which the acquisition width is equal to at least the acquisition step size.

12. The system according to the preceding claim, in which the control means (2) are configured so as to generate acquisition commands in which the acquisition width is equal to the acquisition step size.

13. The system according to the preceding claim, in which the control means (2) comprise processing means (10) installed on board the satellite and being capable of generating the set of spectrum acquisition commands starting from a first set of commands (112) previously received by the onboard processing means (10) and defining the acquisition frequency band and the acquisition width and/or the acquisition step size.

14. The system according to any one of claims 10 to 13, in which the receiver is a redundant receiver.

15. The system according to any one of claims 10 to 14, comprising means (12) allowing said power measurements to be sent simultaneously to a ground station from the satellite.

16. A method for acquiring a power spectrum, the method being implemented by means of an acquisition system according to any one of claims 10 to 15 comprising a receiver according to any one of claims 1 to 7, in which a power spectrum of signals received by said receiver is acquired over a predefined acquisition frequency band, the method comprising:
- a step for generating and sending successive frequency commands to the control device (210), by the control means, in such a manner that the control device adjusts the reception frequency of the receiver to successive acquisition frequencies spaced out one from the next by the acquisition step size,
- a step for generating and sending (220) to the adjustment means, by the control means, a filtering bandwidth control equal to a predefined acquisition width,
- a step (230) for adjusting the width of the bandwidth of the filtering assembly to the acquisition width by means of the adjustment means (108a, 108b),
- a scanning step, during which the control device adjusts (235) the reception frequency of the receiver to the successive acquisition frequencies,
- and, each time that the receiver adjusts (235) its reception frequency to an acquisition frequency, a step (250) for filtering the first signal by means of the filtering assembly (107), and a step (260) for acquiring, by means of the power acquisition means (111), the power of the first signal at the output of the filtering assembly.

17. The method according to the preceding claim, in which the acquisition width is equal to at least the acquisition step size.

18. The method according to any one of claims 16 to 17, in which the control means (2) comprise processing means (10) installed on board the satellite capable of generating the set of spectrum acquisition commands starting from a first set of commands defining the acquisition frequency band and the elementary bandwidth and/or the acquisition step size, the method comprising a preliminary step (200) for generating and for sending the first set of commands to the processing means (200) from a ground station.

19. The method according to any one of claims 16 to 18, comprising a step for transmission of the power measurements to a transmitter installed on board the satellite and a step for simultaneously sending said measurements to a ground station.

20. A method for optimizing the reception frequency of the receiver comprising:
- at least one step for acquiring a spectrum according to the method of acquisition according to any one of claims 16 to 19,
- a step for identifying a frequency band verifying a predetermined spectral quality criterion based on the power measurements,
- a step for generating a frequency command designed to adjust the reception frequency of the receiver to a frequency included within the identified frequency band and a step for sending the frequency command to the control device.
